(19) Europäisches Patentamt

European Patent Office

Office européen des brevets

(11) **EP 0 863 109 A1**

(12) **EUROPÄISCHE PATENTANMELDUNG**

(43) Veröffentlichungstag:
**09.09.1998 Patentblatt 1998/37**

(51) Int. Cl.⁶: **C01B 39/02**

(21) Anmeldenummer: **98102946.5**

(22) Anmeldetag: **20.02.1998**

(84) Benannte Vertragsstaaten:
**AT BE CH DE DK ES FI FR GB GR IE IT LI LU MC NL PT SE**
Benannte Erstreckungsstaaten:
**AL LT LV MK RO SI**

(30) Priorität: **03.03.1997 DE 19708619**

(71) Anmelder: **BAYER AG**
**51368 Leverkusen (DE)**

(72) Erfinder:
• **Puppe, Lothar, Dr.**
**51399 Burscheid (DE)**
• **Wussow, Klaus, Dr.**
**57250 Netphen (DE)**
• **Reiss, Gerhard, Dipl.-Ing.**
**51375 Leverkusen (DE)**
• **Michel, Stefan, Dr.**
**29664 Walsrode (DE)**

(54) **Verfahren und Vorrichtung zum Ionenaustausch in Zeolithen**

(57) Die Erfindung betrifft ein Verfahren zum quasi-kontinuierlichen Austausch von Kationen in Zeolithen sowie eine Vorrichtung zur Durchführung des Verfahrens. Das Verfahren eignet sich insbesondere für Austauschprozesse mit einer ungünstigen Gleichgewichtslage, in denen ein hoher Überschuß des auszutauschenden Kations eingesetzt werden muß, um einen bestimmten Austauschgrad zu erreichen, und für Prozesse, in denen ein sehr hoher Austauschgrad erreicht werden soll.

EP 0 863 109 A1

## Beschreibung

Die Erfindung betrifft ein Verfahren und eine Vorrichtung zum quasikontinuierlichen Austausch von Kationen in Zeolithen. Das Verfahren eignet sich insbesondere für Austauschprozesse mit einer ungünstigen Gleichgewichtslage, in denen ein hoher Überschuß des auszutauschenden Kations eingesetzt werden muß, um einen bestimmten Austauschgrad zu erreichen, und für Prozesse, in denen ein sehr hoher Austauschgrad erreicht werden soll.

Der Austausch von Kationen in Zeolithen wird bereits seit langem zur Modifizierung von Zeolithen genutzt. Bisher wird der Ionenaustausch bevorzugt absatzweise z.B. in Behältern mit oder ohne Rühreinrichtung oder in einzelnen durchströmten Säulen durchgeführt. Diese diskontinuierlichen Prozesse eignen sich besonders für Austauschprozesse mit günstigem Austauschgleichgewicht, bei dem das auszutauschende Kation bevorzugt adsorbiert wird, oder zur Herstellung von Zeolithen mit geringem oder mittlerem Austauschgrad. Liegt jedoch ein ungünstiges Austauschgleichgewicht vor oder soll ein sehr hoher Austauschgrad erreicht werden, dann sind die diskontinuierlichen Verfahren unwirtschaftlich, da ein sehr hoher Überschuß des auszutauschenden Kations eingesetzt werden muß und der Ausnutzungsgrad der Austauschlösung sehr niedrig ist. Ein solches Verfahren wird beispielsweise in der Offenlegungsschrift EP 297542 A1 beschrieben.

Es ist grundsätzlich bekannt, daß die Effizienz eines Verfahrens, bei dem ein Austausch zwischen zwei Phasen durchgeführt werden soll, erheblich verbessert werden kann, wenn die Phasen im Gegenstrom zueinander geführt werden. Während die kontinuierlichen Gegenstrom-Verfahren bei Prozessen mit fluiden Phasen bereits weit verbreitet sind, werden sie bei Prozessen mit Feststoffen nur selten eingesetzt, da es im allgemeinen technisch schwierig ist, eine gleichmäßige kontinuierliche Feststoffbewegung zu erzeugen und zu kontrollieren. Besonders hohe Anforderungen werden gestellt, wenn die Partikel gegen mechanische Belastungen nicht stabil sind. Dies trifft z.B. auf Zeolith-Granalien in flüssiger Phase in besonderem Maße zu.

Aufgrund der begrenzten mechanischen Stabilität der Zeolithe sind bekannte Gegenstromverfahren wie die mehrstufige Rührkesselkaskade oder die mehrstufige Wirbelschicht-Kolonne (Cloete-Streat Apparat) für den Ionenaustausch an Zeolith-Granalien nicht geeignet.

Das alternativ einsetzbare Bandfilter kann nur für Austauschprozesse eingesetzt werden, für die eine kurze Verweilzeit ausreichend ist. Es kann daher für den Austausch an Zeolith-Pulvern genutzt werden. Für den Austausch an Granalien ist es dagegen nicht geeignet, da der Stofftransport im Korn langsam verläuft und daher lange Verweilzeiten benötigt werden.

Eine denkbare andere Verfahrensalternative stützt sich auf das Prinzip des „simulated moving bed" (kurz SMB) wie es in der US 2985589 beschrieben ist. Die US 2985589 hat ein Verfahren zur Trennung von Strukturisomeren und neuerdings auch für die Trennung von Stereoisomeren an Adsorbentien zum Gegenstand.

Bei diesem Verfahren wird das Adsorbens nicht tatsächlich sondern nur scheinbar bewegt. Das Adsorbens wird auf einzelne Horden innerhalb einer Kolonne oder aber auf eine Reihe von Einzelsäulen verteilt, die im Kreis miteinander verbunden sind. Durch periodisches Weiterschalten der Zu- und Ablaufstellen entsteht dann eine scheinbare Festbettbewegung. Das Standardverfahren setzt sich aus vier Sektionen zusammen, von denen zwei für die eigentliche Trennung, eine Sektion für die Reinigung des Adsorbens und eine Sektion für die Reinigung des Lösungsmittels benötigt werden. Es ist jedoch nicht fuhr die Herstellung von Adsorbentien geeignet, da das Adsorbens in einem geschlossenen Kreislauf umläuft und durch den Prozeß nicht verändert wird. Das Adsorbens wird in dem Verfahren nur als Hilfsmittel zur Trennung der in der Flüssigkeit gelösten Komponenten genutzt.

Der Erfindung liegt die Aufgabe zugrunde ein gegenüber dem Stand der Technik verbessertes Ionenaustauschverfahren für Zeolithe, insbesondere Zeolith-Granalien zu entwickeln, das eine schonende Behandlung des Zeolith gewährleistet und zugleich eine lange Verweilzeit erlaubt.

Diese Aufgabe wird erfindungsgemäß dadurch gelöst, daß das aus Zeolith-Granalien bestehende Festbett in eine Reihe von Segmenten geteilt wird, und daß der Zulauf der Austauschlösung sowie der Ablauf der teilweise oder vollständig verbrauchten Austauschlösung periodisch in Richtung der Flüssigkeitsströmung um ein Segment weitergeschaltet wird. Die Segmente sind untereinander verbunden, so daß der Ablauf des i-ten Segmentes der Zulauf des (i+1)-ten Segmentes ist. Die Segmente zwischen der Zulaufstelle und der Ablaufstelle der Austauschlösung bilden dabei die Austauschzone. Die Periodendauer der Zeitintervalle kann konstant oder veränderlich sein. In einer erweiterten Form dieses Verfahrens wird ein bestimmter Anteil der teilweise verbrauchten Austauschlösung auf ein oder mehrere nachfolgende Segmente geleitet, um diesen Anteil der Austauschlösung vollständig auszunutzen.

Gegenstand der Erfindung ist ein kontinuierliches Gegenstrom-Verfahren zum Ionenaustausch mittels Ionenaustauschlösung an Zeolithen, das dadurch gekennzeichnet ist, daß der Zeolith, bevorzugt in Granulatform, als Schüttung auf zwei oder mehr, bevorzugt mindestens drei, besonders bevorzugt mindestens vier, wechselweise in Reihe schaltbare Behälter verteilt wird, und die Ionenaustauschlösung durch die Schüttungen der in Reihe geschalteten Behälter geleitet wird, daß die Reihenfolge der in Reihe geschalteten Behälter in bestimmten Zeitintervallen zyklisch verändert wird, wobei der Zulauf der frischen Ionenaustauschlösung von dem jeweils ersten auf den in der Reihe folgenden Behälter umgestellt wird und daß bei Erreichen eines gewünschten Ionenaustauschgrades einer Zeolith-Schüttung der Behälter mit der fertigen Schüttung von der Behälterreihe abgekoppelt, und der Zeolith durch Waschen von Ionenaustauschlösung befreit, isoliert und gegebenenfalls durch eine neue unbehandelte Zeolith-Schüttung ersetzt wird.

Die Ionenaustauschlösung ist insbesondere eine Alkali-, Erdalkali- oder Übergangsmetallkationen-haltige Lösung.

Bevorzugt ist insbesondere eine Li-Salz- oder Mg-Salz Lösung als Ionenaustauschlösung.

Geeignete Gegenionen zu Li oder Mg sind: Anorganische Anionen wie Halogenide, Sulfate, Nitrate.

Das bevorzugte Lösemittel der Ionenaustauschlösung ist Wasser.

In einem bevorzugten Verfahren beträgt die Temperatur der Ionenaustauschlösung 80 bis 105°C, insbesondere 85 bis 100°C.

Die Konzentration der zulaufenden Ionenaustauschlösung kann von 0,1 bis 10 molar betragen. Bevorzugt ist eine Konzentration von 0,5 bis 8 molar und besonders bevorzugt von 1 bis 5 molar.

Die Konzentration wird möglichst hoch gewählt, um den Aufwand für die Aufarbeitung zu reduzieren. Die Konzentration der Austauschlösung wird unter Umständen begrenzt durch die Stabilität der Granalien und durch Löslichkeitsgrenzen des anfallenden Salzgemisches.

Die Strömungsgeschwindigkeit der Ionenaustauschlösung in der Schüttung beträgt insbesondere von 0,5 bis 20 m/h, bevorzugt von 1 bis 10 m/h, besonders bevorzugt von 2 bis 3 m/h, um einen gleichmäßigen Ionenaustausch zu gewährleisten.

Die Taktzeit eines Zeitintervalles beträgt insbesondere mindestens 15 min, bevorzugt mindestens 1 Stunde.

Ein bevorzugtes Verfahren liefert einen Endionenaustauschgrad von mindestens 95 %, bevorzugt mindestens 98 %, besonders bevorzugt mindestens 99 %.

Der Austauschgrad A ist dabei definiert als

$$A = \frac{q_{Li}}{q_{Li} + q_{Na}}$$

wobei $q_{Li}$ und $q_{Na}$ die Konzentration von Li bzw. Na im Zeolithen sind.

Die Taktzeit wird insbesondere beim ersten Durchlaufen der Behälterreihe, die mit unbeladenem bzw. unbehandeltem Zeolith gefüllt ist, um das 1,2 bis 3fache, insbesondere 1,5 bis 2fache, länger gehalten als in den folgenden Taktzyklen.

Zeolithe im Sinne der Erfindung sind alle grundsätzlich bekannten, zum Ionenaustausch geeigneten Typen, insbesondere Na-Zeolith-X.
(Zusammensetzung: $1,0 \pm 0,2$ $Na_2O_3 \cdot 2\text{-}3$ $SiO_2$).
Bevorzugt werden Zeolithe in Granulatform eingesetzt.

Zylinderförmige Granulate werden üblicherweise aus Zeolithpulver und geeigneten Bindemitteln (z.B. $SiO_2$, $Al_2O_3$ oder Tonmineralien) mit Hilfe von Verformungseinrichtungen wie z.B. Walzengranulatoren, Strangpressen, Brikettiermaschinen, Kompaktierwalzen oder Extrudern hergestellt. Kugelförmige Granulate erhält man durch Aufbauagglomeration mit entsprechenden Apparaten wie z.B. Tellergranulatoren, Granuliermaschinen, Intensivmischern oder Rotorgranulatoren.

Die typische Korngröße der bevorzugt einzusetzenden Zeolithe liegt bei 0,5 bis 3,0 mm Durchmesser (Zahlenmittel).

Als Zeolith wird bevorzugt Na-Zeolith-X und als Austauschlösung eine Li-Salz-Lösung, insbesondere LiCl-Lösung, eingesetzt.

Der Zeolith wird insbesondere nach an sich bekannten Methoden vorbehandelt. Eine typische und bevorzugte Vorbehandlung für den Zeolith, um ihn im Austauschverfahren einsetzen zu können, besteht in der Herstellung von wasserstabilen Granulaten. Mit Kieselsol ($SiO_2$) granulierter Zeolith, entsprechend der Verfahren z.B. gemäß den Schriften DE 3 401 485 oder DE 2 642 518, sind ohne eine Temperaturbehandlung (>400°C) für das Austauschverfahren einsetzbar. Ebenso einsetzbar sind die Granulate, bei denen entsprechend der Schrift DE 1 203 238 das $SiO_2$-Bindemittel in einem sogenannten Aluminierungsschritt mit Na-Aluminat in Zeolith umgewandelt worden ist.

Tongebundene bzw. $Al_2O_3$-gebundene Zeolithgranulate können insbesondere vor dem Einsatz im erfindungsgemäßen Austauschverfahren einer Temperaturbehandlung von mindestens 600°C bzw. 400°C unterzogen werden, da sie sonst nicht wasserstabil sind.

Weiterer Gegenstand der Erfindung ist eine Vorrichtung zum Ionenaustausch mittels Ionenaustauschlösung an Zeolithen bestehend mindestens aus zwei oder mehr Austauschbehältern für eine Zeolithschüttung, wobei jeder Behälter einen Einlaß und einen Auslaß für die Austauschlösung sowie einen Einlaß und einen Auslaß für die Zeolithschüttung aufweist, wobei jeder Lösungseinlaß mit dem Zulauf für die Austauschlösung und jeder Lösungsauslaß mit dem Ablauf für die benutzte Austauschlösung absperrbar verbunden ist, und in der die Behälter über absperrbare Verbindungsleitungen in Reihe schaltbar sind.

Eine bevorzugte Variante der Vorrichtung ist dadurch gekennzeichnet, daß die Verbindungsleitungen den Auslaß und einen Einlaß benachbarter Behälter verbinden.

In einer Variante der Vorrichtung ist dem Lösungseinlaß der Behälter ein Wärmetauscher zur Temperierung der Austauschlösung vorgeschaltet.

Die Behälter sind bevorzugt wärmeisoliert bzw. mit einem Wärmetauscher mit Temperatursensor versehen.

Eine weitere bevorzugte Form der Vorrichtung ist dadurch gekennzeichnet, daß der Lösungseinlaß und der Lösungsauslaß der Behälter und/oder die Verbindungsleitungen Ventile zur Öffnung bzw. Absperrung aufweisen, die gegebenenfalls fremdgesteuert sind.

Geeignete Rückhaltemittel wie Siebe oder Einsatzkörbe verhindern gegebenenfalls ein Austreten des Zeoliths durch den jeweiligen Lösungsauslaß des Behälters.

Im Gegensatz zum oben beschriebenen SMB-Prozeß wird das Adsorbens durch den laufenden Prozeß verändert, indem ein oder mehrere Ionen aus der Austauschlösung durch das Adsorbens aufgenommen werden und eine äquivalente Menge Ionen vom Adsorbens an die Austauschlösung abgegeben werden. Das Adsorbens wird zudem nicht wie im SMB-Prozeß in einem geschlossenen Kreislauf gefahren, sondern aus dem Prozeß entnommen, sobald ein Segment (Behälter) die Austauschzone verläßt.

Die periodische Weiterschaltung der Zu- und Abläufe kann mit Einzelventilen oder auch mit einem oder mehreren Rotationsventilen durchgeführt werden.

Vorteile des erfindungsgemäßen Verfahrens liegen in einer materialschonenden Betriebsweise, da die Zeolith-Partikel keiner mechanischen Beanspruchung ausgesetzt sind, in einer gleichmäßigen Produktion mit hoher Produktqualität und einem wesentlich geringeren Verbrauch an kostspieliger Austauschlösung. Die gegebenenfalls mögliche Aufarbeitung einer gebrauchten Austauschlösung (z.B. einer LiCl/NaCl-haltigen Lösung) ist technisch und energetisch vergleichsweise aufwendig. Damit werden deutlich niedrigere Herstellkosten als bei den bekannten diskontinuierlichen Verfahren erreicht. Darüber hinaus ist die Verweilzeit beliebig einstellbar.

Dabei wurde überraschenderweise gefunden, daß bereits mit nur zwei oder drei Säulen schon sehr hohe Austauschgrade erzielt werden können. Dies war nicht zu erwarten, da ein Verfahren mit nur wenigen Säulen der diskontinuierlichen Betriebsweise näher ist als einem denkbaren idealen Gegenstromverfahren.

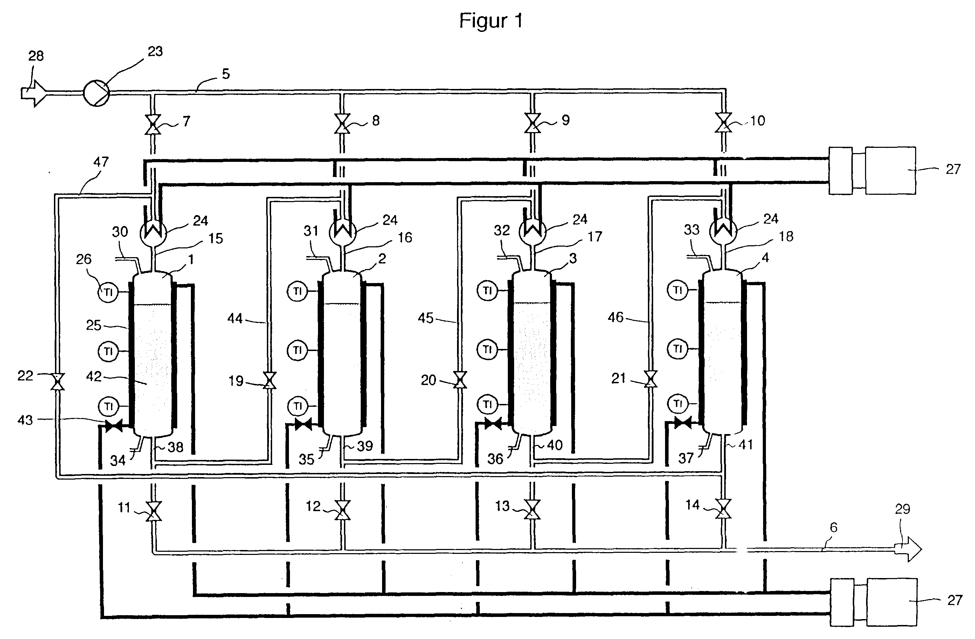

Im folgenden wird die Erfindung anhand der Fig. 1, einem Fließschema der erfindungsgemäßen Vorrichtung, und mit Hilfe von Ausführungsbeispielen näher erläutert.

## Beispiele

Das Fließschema einer Ionenaustausch-Anlage ist in Figur 1 dargestellt. Die Anlage besteht aus einer Anzahl von Austauschbehältern 1 bis 4, deren Auslaß 38, 39, 40, 41, 44, 45, 46, 47 über Rohrleitungen jeweils mit einem Einlaß 15, 16, 17, 18 benachbarter Behälter 1, 2, 3, 4 verbunden ist. Jeder Behälter ist ferner mit der Zulaufleitung 5 für die Austauschlösung 28 sowie mit der Ablaufleitung 6 für die verbrauchte Austauschlösung 29 verbunden. Die Verbindungsleitungen 44 bis 47 zwischen den Behältern 1, 2, 3, 4 sowie die Verbindungen zu Zulauf- 5 und Ablaufleitung 6 können mit Hilfe von Ventilen 19, 20, 21, 22 bzw. 7, 8, 9, 10 und 11, 12, 13, 14 geöffnet oder geschlossen werden. Durch periodisches Schalten der Zulaufventile 7 bis 10, Ablaufventile 11 bis 14 und Kreislaufventile 19 bis 22 wird eine Bewegung der Schüttungen 42 relativ zur Austauschlösung 28 erzeugt.

Die Förderung der Austauschlösung 28 wird z.B. mit Hilfe einer Pumpe 23 durchgeführt. Sofern notwendig, können aber auch zusätzliche Pumpen zwischen den einzelnen Behältern angebracht werden. Die Durchströmungsrichtung der einzelnen Behälter sowie die räumliche Anordnung der Behälter untereinander kann frei gewählt werden.

Die geometrische Form und die Abmessung der Behälter werden entsprechend den Anforderungen des Prozesses festgelegt.

Die Behälter 1 bis 4 weisen ferner Einlässe 30, 31, 32, 33 und Auslässe 34, 35, 36, 37 für die Zeolith-Schüttung 42 auf.

Sofern für den Austausch Temperaturen unterhalb oder oberhalb der Raumtemperatur benötigt werden, sind Wärmetauscher 24 mit Thermostat in den Zuläufen 15 bis 18 vorgesehen. Zusätzlich sind die Behälter mit einem thermostatisierten Doppelmantel 25, 27 ausgerüstet, um eine genauere Temperierung zu gewährleisten. Zur Kontrolle der Temperatur sind Sensoren 26 an verschiedenen Stellen des Behälters 1, 2, 3 oder 4 angebracht.

Hinsichtlich des Temperatur- oder Druckbereichs bei der Durchführung des Verfahrens gibt es keine speziellen Beschränken. Der Druch sollte jedoch günstigerweise oberhalb des Dampfdrucks der Austauschlösung bei der jeweiligen Temperatur liegen.

Die nachfolgenden Beispiele zeigen den Austausch von Na gegen Li an einem Zeolith X-Granulat. Li-Zeolith X ist besonders gut geeignet für die Gewinnung von Sauerstoff aus Luft in einem Druckwechsel-Adsorptionsprozeß und ist daher von großer technischer Bedeutung. Der Austausch wurde in einer Anlage mit bis zu vier Säulen (Durchmesser: 47,5 mm, Länge: 2000 mm) entsprechend der vorhergehenden Beschreibung und zum Vergleich auch in einer einzelnen Säule durchgeführt. Die Beispiele verdeutlichen, daß mit dem erfindungsgemäßen Prozeß ein höherer Austauschgrad bei einem im Vergleich zum konventionellen Einsäulen-Verfahren deutlich geringeren Li-Einsatz erzielt wird.

Die Beispiele dienen zur weiteren Veranschaulichung des erfindungsgemäßen Verfahrens, beschränken die Erfindung jedoch nicht auf diese gezeigten Veranschaulichungen.

## Beispiel 1: (Vergleichsbeispiel)

1 Liter eines Na-Zeolith X-Granulats wird in eine geeignete Säule gegeben. 16 Liter einer 3 molaren LiCl-Lösung wurden dann bei einer Temperatur von 85°C über die Granalienschüttung innerhalb von 17 Stunden gepumpt. Nach Beenden des Ionenaustausches wurde das Granulat mit Wasser gewaschen, das mit LiOH auf einen pH-Wert von 9 eingestellt worden war. Man erreicht am Li-Zeolith X-Granulat einen Austauschgrad von 97%.

Die eingesetzte Li-Menge entspricht einem zwölffachen molaren Überschuß. Der hohe Überschuß ist notwendig, da der Zeolith X bevorzugt Na adsorbiert.

**Beispiel 2:**

Es wurden von vier benachbarten mit Na-Zeolith-X beladenen Säulen zwei Säulen in Reihe geschaltet. In der ersten Periode sind die Ventile 7, 19 und 12 geöffnet und alle anderen Ventile geschlossen. Beim Umschalten von der ersten auf die zweite Periode werden die Ventile 7, 19 und 12 geschlossen und gleichzeitig die Ventile 8, 19 und 13 geöffnet. Die Ventilstellungen für die nachfolgenden Perioden mit den weiteren Säulen ergeben sich analog.

Pro Stunde wurden 3.8 l Austauschlösung einer dreimolaren LiCl-Lösung eingesetzt. Der Austausch wurde bei einer Temperatur von 85°C durchgeführt. Um auch das Na im Granulat in der ersten Säule vollständig auszutauschen, wurde für die erste Periode eine Dauer von 17 h gewählt, alle weiteren Perioden dauerten 12 h. Eine Periodendauer von 12 h entspricht einem achtfachen molaren Überschuß an Li-Ionen. Nach Beenden des Ionenaustausches wurde das Zeolith-Granulat in dem jeweiligen Behälter mit Wasser gewaschen, das mit LiOH auf einen pH-Wert von 9 eingestellt worden war. Man erhielt ein homogenes Granulat mit einem Austauschgrad von 99 %. Im Vergleich zum Austausch in einer einzelnen Säule (Beispiel 1) wird bei einem verbesserten Austauschgrad der molare Li-Überschuß um etwa 33% reduziert.

**Beispiel 3:**

Es wurden drei Säulen der vier mit Zeolith beladenen Säulen in Reihe geschaltet. In der ersten Periode sind die Ventile 7, 19, 20 und 13 geöffnet und alle anderen Ventile geschlossen. Beim Umschalten von der ersten auf die zweite Periode werden die Ventile 7, 19 und 13 geschlossen und gleichzeitig die Ventile 8, 21 und 14 geöffnet.

Pro Stunde wurden 5.3 l einer 3,6-molaren Austauschlösung eingesetzt. Der Austausch wurde wie in Beispiel 2 bei einer Temperatur von 85°C durchgeführt. Für die erste Periode wurde eine Dauer von 12 h, für alle weiteren Perioden eine Dauer von 8 h gewählt. Die Periodendauer von 8 h entspricht einem 9,6-fachen molaren Überschuß an Li-Ionen. Nach Beenden des Ionenaustausches wurde das fertige Zeolith-Granulat aus den Säulen entnommen und mit Wasser gewaschen, das mit LiOH auf einen pH-Wert von 9 eingestellt worden war. Wie in Beispiel 2 wurde ein Austauschgrad von 99 % gemessen.

**Patentansprüche**

1. Kontinuierliches Gegenstrom-Verfahren zum Ionenaustausch mittels Ionenaustauschlösung an Zeolithen dadurch gekennzeichnet, daß der Zeolith, bevorzugt in Granulatform, als Schüttung auf zwei oder mehr, bevorzugt mindestens drei, besonders bevorzugt mindestens vier, wechselweise in Reihe schaltbare Behälter verteilt wird, und die Ionenaustauschlösung durch die in Reihe geschalteten Behälter geleitet wird, daß die Reihenfolge der in Reihe geschalteten Behälter in bestimmten Zeitintervallen zyklisch verändert wird, wobei der Zulauf der frischen Ionenaustauschlösung von dem jeweils ersten auf den in der Reihe folgenden Behälter umgestellt wird und daß bei Erreichen eines gewünschten Ionenaustauschgrades einer Zeolith-Schüttung der Behälter mit der fertigen Schüttung von der Behälterreihe abgekoppelt, und der Zeolith durch Waschen von Ionenaustauschlösung befreit, isoliert und gegebenenfalls durch eine neue unbehandelte Zeolith-Schüttung ersetzt wird.

2. Verfahren nach Anspruch 1, dadurch gekennzeichnet, daß die Ionenaustauschlösung eine Alkali-, Erdalkali- oder Übergangsmetallkationen-haltige Lösung ist.

3. Verfahren nach Anspruch 2, dadurch gekennzeichnet, daß die Ionenaustauschlösung eine Li-Salz- oder Mg-Salz-Lösung ist.

4. Verfahren nach den Ansprüchen 1 bis 3, dadurch gekennzeichnet, daß das Lösemittel der Ionenaustauschlösung Wasser ist.

5. Verfahren nach den Ansprüchen 1 bis 4, dadurch gekennzeichnet, daß die Temperatur der Ionenaustauschlösung auf von 80 bis 105°C, insbesondere von 85 bis 100°C, gehalten wird.

6. Verfahren nach den Ansprüchen 1 bis 5, dadurch gekennzeichnet, daß die Konzentration der zulaufenden Ionenaustauschlösung von 0,1 bis 10 molar beträgt.

7. Verfahren nach den Ansprüchen 1 bis 6, dadurch gekennzeichnet, daß die Strömungsgeschwindigkeit der Ionenaustauschlösung in der Schüttung von 0,5 bis 20 m/h, bevorzugt von 1 bis 10 m/h, besonders bevorzugt von 2 bis 3 m/h, beträgt.

8. Verfahren nach den Ansprüchen 1 bis 7, dadurch gekennzeichnet, daß die Taktzeit eines Zeitintervalles mindestens 15 min, bevorzugt mindestens 1 Stunde, beträgt.

9. Verfahren nach den Ansprüchen 1 bis 8, dadurch gekennzeichnet, daß der gewünschte Endionenaustauschgrad mindestens 95 %, bevorzugt mindestens 98 %, besonders bevorzugt mindestens 99 %, beträgt.

10. Verfahren nach den Ansprüchen 1 bis 9 dadurch gekennzeichnet, daß die Taktzeit beim ersten Durchlaufen der Behälterreihe, die mit unbeladenem Zeolith gefüllt ist, um das 1,2 bis 3fache länger gehalten wird als in den nachfolgenden Taktzyklen.

11. Verfahren nach den Ansprüchen 1 bis 10 dadurch gekennzeichnet, daß als Zeolith Na-Zeolith-X und als Austauschlösung eine Li-Salz-Lösung eingesetzt wird.

12. Vorrichtung zum Ionenaustausch mittels Ionenaustauschlösung an Zeolithen bestehend mindestens aus zwei oder mehr Austauschbehältern (1, 2, 3, 4) für eine Zeolithschüttung (42), wobei jeder Behälter (1, 2, 3, 4) einen Einlaß (15, 16, 17, 18) und einen Auslaß (38, 39, 40, 41) für die Austauschlösung (28) sowie einen Einlaß (30, 31, 32, 33) und einen Auslaß (34, 35, 36, 37) für die Zeolithschüttung (42) aufweist, wobei jeder Lösungseinlaß (15, 16, 17, 18) mit dem Zulauf (5) für die Austauschlösung (28) und jeder Lösungsauslaß (38, 39, 40, 41) mit dem Ablauf (6) für die benutzte Austauschlösung (29) absperrbar verbunden ist, und in der die Behälter (1, 2, 3, 4) über absperrbare Verbindungsleitungen (44, 45, 46, 47) in Reihe schaltbar sind.

13. Vorrichtung nach Anspruch 12, dadurch gekennzeichnet, daß die Verbindungsleitungen (44, 45, 46, 47) den Auslaß (38, 39, 40, 41) und einen Einlaß (18, 16, 17, 15) benachbarter Behälter (1, 2, 3, 4) verbinden.

14. Vorrichtung nach den Ansprüchen 12 bis 13, dadurch gekennzeichnet, daß dem Lösungseinlaß (15, 16, 17, 18) der Behälter (1, 2, 3, 4) ein Wärmetauscher (24) zur Temperierung der Austauschlösung (28) vorgeschaltet ist.

15. Vorrichtung nach den Ansprüchen 12 bis 14, dadurch gekennzeichnet, daß die Behälter (1, 2, 3, 4) mit einem Wärmetauscher (25) mit Temperatursensor (26) versehen sind.

16. Vorrichtung nach den Ansprüchen 12 bis 15, dadurch gekennzeichnet, daß Lösungseinlaß (15, 16, 17, 18) und der Lösungsauslaß (38, 39, 40, 41) der Behälter (1, 2, 3, 4) und/oder die Verbindungsleitungen (44, 45, 46, 47) gegebenenfalls fremdgesteuerte Ventile (7, 8, 9, 10; 11, 12, 13, 14; 19, 20, 21, 22) zur Öffnung bzw. Absperrung aufweisen.

Figur 1

Europäisches
Patentamt

**EUROPÄISCHER RECHERCHENBERICHT**

Nummer der Anmeldung

EP 98 10 2946

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | GB 1 382 450 A (ROBERT RAMPTON PORTER) 29.Januar 1975 * Ansprüche 1,9 * | 1,12 | C01B39/02 |
| A,D | US 2 985 589 A (BROUGHTON D. B. ET AL) 23.Mai 1961 * Anspruch 1 * | 1 | |
| A | US 4 048 284 A (HORTON NORMAN H ET AL) 13.September 1977 * Ansprüche 1,8 * | 1,12 | |
| A | DATABASE WPI Section Ch, Week 7928 Derwent Publications Ltd., London, GB; Class J01, AN 79-51614B XP002067265 & JP 54 068 799 A (TOYO SODA KK) * Zusammenfassung * | 1 | |
| A | DATABASE WPI Section Ch, Week 9712 Derwent Publications Ltd., London, GB; Class E33, AN 97-131193 XP002067266 & SU 1 837 585 A (GROZN OIL IND RES INST) * Zusammenfassung * | 1 | RECHERCHIERTE SACHGEBIETE (Int.Cl.6) C01B B01J |

Der vorliegende Recherchenbericht wurde für alle Patentansprüche erstellt

| Recherchenort | Abschlußdatum der Recherche | Prüfer |
|---|---|---|
| BERLIN | 8.Juni 1998 | Clement, J-P |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie,übereinstimmendes
    Dokument

EPO FORM 1503 03.82 (P04C03)